(19)

**Europäisches Patentamt**
**European Patent Office**
**Office européen des brevets**

(11) **EP 4 319 235 A1**

(12) **EUROPEAN PATENT APPLICATION**

(43) Date of publication:
**07.02.2024   Bulletin 2024/06**

(21) Application number: **22189108.8**

(22) Date of filing: **05.08.2022**

(51) International Patent Classification (IPC):
**H04W 16/20** $^{(2009.01)}$      **G06N 3/08** $^{(2023.01)}$
**H04W 16/22** $^{(2009.01)}$      **H04W 24/10** $^{(2009.01)}$

(52) Cooperative Patent Classification (CPC):
**G06N 3/08; H04W 16/20;** H04W 24/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Limmer, Steffen**
**80687 München (DE)**

• **Michailow, Nicola**
**81825 München (DE)**
• **Hein, Daniel**
**81549 München (DE)**
• **Martinez Alba, Alberto**
**80935 München (DE)**
• **Sterzing, Volkmar**
**85579 Neubiberg (DE)**
• **Weber, Marc Christian**
**80339 München (DE)**

(74) Representative: **Siemens Patent Attorneys**
**Postfach 22 16 34**
**80506 München (DE)**

(54) **A METHOD FOR TEACHING AN ELECTRONIC COMPUTING DEVICE, A COMPUTER PROGRAM PRODUCT, A COMPUTER-READABLE STORAGE MEDIUM AS WELL AS AN ELECTRONIC COMPUTING DEVICE**

(57)     The invention relates to a method for teaching an electronic computing device (10) comprising at least a machine learning algorithm (22) for predicting a position-based propagation (12) in an environment (14), comprising the steps of:
- providing a mathematical model for the position-based propagation (12), wherein the mathematical model comprises at least a physical model for the propagation in the environment (14
- generating training data for the machine learning algorithm (22) comprising a propagation field and/or a propagation domain;
- training the machine learning algorithm (22) by fitting the training data to a partial derivative of the machine learning algorithm (22); and
- obtaining a prediction of a propagation loss by a weighted sum of multiple evaluations of the trained machine learning algorithm (22).

Furthermore, the invention relates to a computer program product, a computer-readable storage medium as well as to an electronic computing device.

FIG 2

EP 4 319 235 A1

**Description**

The invention relates to a method for teaching an electronic computing device comprising at least a machine learning algorithm for predicting a position-based propagation in an environment. Furthermore, the invention relates to a method for using the trained electronic computing device, to a computer program product, to a computer-readable storage medium as well as to an electronic computing device for predicting a propagation in an environment.

Learning a prediction of path loss maps and spatial-loss fields in wireless cellular networks is an important problem used for main downstream tasks such as location and quality of service prediction, for example, data rate, latency, upcoming connection loss or furthermore. These tasks are often based on received signal strength indicators (RSSI) of the signal. RSS-information is a standard feature in most current wireless protocols. For example, RSSI is used to trigger handovers and to enable UE-BS-association for load balancing purposes. Therefore, exploiting RSS-information for learning a prediction of path loss maps, spatial-loss fields and solving downstream tasks such as localization is attractive since RSSI is a feature already built-in the wireless protocols and does not require any further specific signal processing at the UE. On the other hand, the time-based and angle-based methods require high-precision clocks and antenna arrays, which make them unfavorable for implementation, respectively. One draw-back of the RSSI is a high calibration effort, which is necessary in order to achieve a satisfactory accuracy in structured environments. Calibration is typically necessary to account for a complex propagation behavior in structured environments as typically found inside buildings and dense building areas. Propagation environments are typically influenced also by individual objects such as walls, furniture and machinery or buildings which can only be modelled to a certain granularity and therefore often have to be regarded as uncertain.

US 8102314 B2 relates to a position-finding method for determining the location of a mobile object. The features, for example received field strengths, of a plurality of base stations are measured, and the object position is located from these features, using a reference map. During an initialization process, a reference map is created which comprises a multiplicity of positions and the associated feature-dependent values. During use of the method, a plurality of position-finding processes are carried out, by means of each of which a measured feature-dependent value and from this, a located position of the object, are determined using the predetermined reference map. The predetermined reference map is in each case updated for at least some of the positions found, during which updates, the feature-dependent values are each corrected by a correction term at the support points of the reference map in a predetermined area surrounding an object position.

It is an object of the invention to provide a method, a computer program product, a computer-readable storage medium as well as an electronic computing device by which a more efficient predicting of a position-based propagation in an environment is performed.

This object is solved by a method, a computer program product, a computer-readable storage medium as well as an electronic computing device according to the independent claims. Advantageous forms of configuration are presented in the dependent claims.

One aspect of the invention relates to a method for teaching an electronic computing device comprising at least a machine learning algorithm for predicting a position-based propagation in an environment. A mathematical model for the position-based propagation is provided, wherein the mathematical model comprises at least a physical model for the propagation in the environment. Training data is generated for the machine learning algorithm comprising a propagation field and/or a propagation domain. The machine learning algorithm is trained by fitting the training data to a partial derivative of the machine learning algorithm and a prediction of a propagation loss is obtained by a weighted sum of multiple evaluations of the trained machine learning algorithm.

Therefore, a method is provided to perform physics-aware prediction and learning based on RSSI (Received Signal Strength Indicator) pathloss measurements and an approximate modelling of side-information via a spatial-loss field. The proposed method uses a physics-based problem formulation to achieve higher prediction accuracy which enables higher accuracy of downstream tasks such as localization and mapping. In addition, the approach can be used to obtain structural information about the environment in uncertain or unknown areas via completion of the spatial-loss field based on RSSI measurements.

Therefore, compared to machine learning approaches, the proposed physics-aware network includes physical dependencies between spatial-loss fields and measured path loss in the training phase of the neural network. This improves generalization and prediction quality and reduces training time, amount of required training data, and number of neural network parameters which results in faster interference time. Furthermore, compared to machine learning approaches, for example, convolutional networks, or simulation methods, for example raytracing, based on finite difference time domain, the learned physics-aware network can account for uncertainty and partial information of the environment geometry by using partial training data of the spatial-loss field and path loss data only for coordinates where it is known. Compared to simulation methods, it is possible to calculate derivatives of the learned spatial-loss field and the learned path loss map which allows for faster solution of downstream tasks such as localization. Compared to simulation methods, for example, raytracing or based on finite difference time domain, the physics-aware network can easily include real-world path loss measurements and thereby provide easier calibration and better simulation to real transfer in a form of more accurate predictions of path loss and spatial-loss field in the real environment. Furthermore, compared to simulation methods, the learned network can use path loss data to reconstruct a spatial-loss field which can be used to determine significant changes in the propagation environment, for example, the presence or absence of large obstacles.

Furthermore, compared to simulation methods, the physics-aware network can be realized as a bayesian neural network or an ensemble of neural networks to model uncertainties of the spatial-loss fields or path loss maps, for example, due to the presence or absence of large obstacles or variations in the propagation due to humidity.

In particular, one step is to use the new machine learning method that is based on the known laws of physics, in particular represented by a spatial-loss field (SLF) and corresponding constraints to the gradients and applied to a radio propagation problem (SLF is based on floor plan and obstacle material properties and training data are RSSI measurements). Conventional physics-aware machine learning methods are typically based on partial differential equations (PDE), while in RSSI case there are integral equations used.

According to an embodiment, training data additionally comprises second training data of propagation measurements and training the machine learning algorithm additionally comprises fitting the second training data to weighted sums of evaluations of the machine learning algorithm. Therefore, the mathematical model is provided in an efficient way, wherein with the second training data an improvedsimulation of the environment may be realized.

According to another embodiment, the mathematical model comprises at least additionally a transmission power parameter and a free-space parameter of the propagation loss. Therefore, the mathematical model can simulate the transmission power and the free-space in order to provide a complete model to simulate the position-based propagation.

According to another embodiment, propagation loss simulation assumes that integrals over the propagation domain are calculated as line integrals over a propagation field. This reduces the dimensionality and training effort of the mathematical model.

In another embodiment, a dimensionality of the propagation loss simulation is reduced by using a Radon transformation. Therefore, x/y are transformed to the Radon coordinates in order to reduce the dimensionality and the training effort.

In another embodiment, the propagation loss is assumed as corresponding to a two- or three-dimensional integral over a propagation field. Therefore, the mathematical model is provided in an easy way in order to predict a position-based propagation with small effort.

According to another embodiment, for the propagation field at least one physical parameter of the environment is predefined. As an example, a material of an obstacle of the environment is predefined with a physical parameter. Therefore, an efficient predicting of a position-based propagation may be realized.

In another embodiment, the at least one physical parameter defines environment geometry information via transmission coefficients. In particular, with the parameter, the RF-waves travelling between a different transmission receiver path through a common building material such as a drywall, Plexiglas, blinds, glass, plywood or furthermore can be simulated in an efficient way.

According to another embodiment, the machine learning algorithm is provided as a neural network. Therefore, an efficient machine learning algorithm is provided, wherein the neural network may be, for example, a supervised neural network or an unsupervised neural network.

A second aspect of the invention relates to a method for using the trained electronic computing device, wherein the position-based propagation in the environment is predicted by optimizing parameters of the neural network based on loss descent direction.

According to an embodiment, the propagation field simulation is evaluated by derivative of machine learning algorithm and/or the propagation loss is evaluated by weighted sum of multiple machine learning evaluations.

In particular, the present methods are computer implemented methods. Therefore, a further aspect of the invention relates to a computer program product comprising program code means for performing the method according to the first aspect of the invention or the second aspect of the invention.

A still further aspect of the invention relates to a computer-readable storage medium comprising at least the computer program product according to the preceding aspect.

Another aspect of the invention relates to an electronic computing device for predicting a propagation in an environment, comprising at least one machine learning algorithm, wherein the machine learning algorithm is trained by a method according to the first aspect of the invention.

A still further aspect of the invention relates to an electronic computing device for predicting a propagation in an environment, comprising at least one trained machine learning algorithm, wherein the electronic computing device is configured for performing a method according to the second aspect of the invention.

The electronic computing device may comprise processors, electrical circuits, for example, integrated circuits, or further electronic means for performing the method. In particular, the methods are performed by the electronic computing device.

For use cases or use situations, which may arise in the method and which are not explicitly described here, it may be provided that, in accordance with the method, an error message and/or a prompt for user feedback is output and/or a default setting and/or a predetermined initial state is set.

According to the invention,

Fig. 1 shows a schematic flow chart according to an embodiment of the invention; and

Fig. 2 shows a top view of an environment.

In the figures the same elements are indicated by the same reference signs.

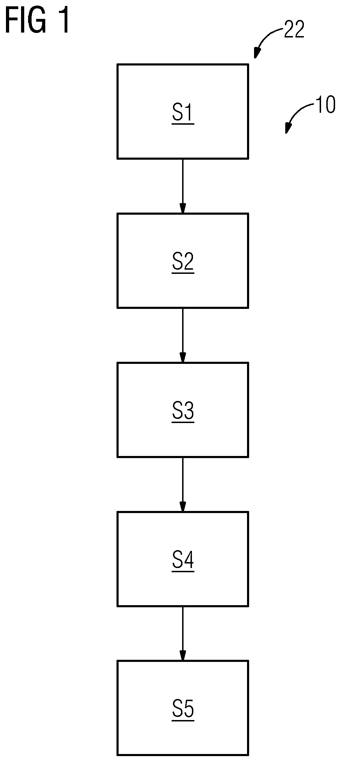

Fig. 1 shows a schematic flow chart according to an embodiment of the invention. In particular, the method which is shown in Fig. 1 is performed by an electronic computing device 10, which is just schematically shown.

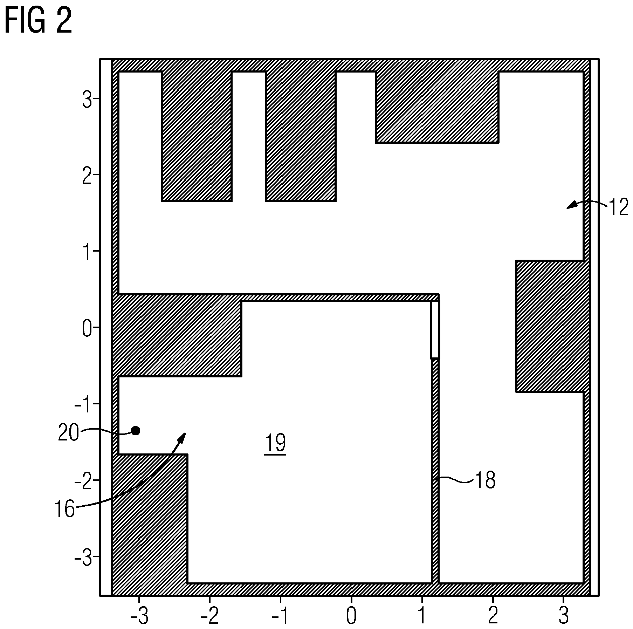

The embodiment may particularly refer to predicting a position-based propagation of radio waves in an environment 14 (Fig. 2) of a wireless cellular network. In such a wireless cellular network the prediction may comprise a prediction of path loss maps and spatial-loss fields. From that a location of a cellular phone, a quality of service, a data rate, a latency, and/or an upcoming connection loss may be predicted or determined. This information may in turn be used to control a connection of a cellular phone proactively.

Fig. 1 shows that in a first step S1 a physics-aware loss functions comprising mixed neural network derivatives are defined and sums of multiple neural network evaluations are presented. In a second step S2, inputs comprising a training set of loss field and integrated loss field are received. In a third step S3, the neural network parameters are initialized. In a fourth step S4, the neural network parameters are optimized based on loss descent direction. In a fifth step S5, the loss field is evaluated via the mixed neural network derivative, integrated loss field is evaluated via the signed sum of multiple neural network evaluations.

In particular, Fig. 1 shows a method for teaching the electronic computing device 10 comprising at least a machine learning algorithm for predicting a position-based propagation 12 (Fig. 2) in the environment 14 (Fig. 2).

A mathematical model for the position-based propagation 12 is provided, wherein the mathematical model comprises at least a physical model for the propagation in the environment 14. Training data is generated for the machine learning algorithm comprising a propagation field and/or a propagation domain. The machine learning algorithm is trained by fitting the training data to a partial derivative of the machine learning algorithm and a prediction of a propagation loss is obtained by a weighted sum of multiple evaluations of the trained machine learning algorithm.

Furthermore, training data additionally comprises second training data of propagation measurements, and training the machine learning algorithm additionally comprises fitting the second training data to weighted sums of evaluations of the machine learning algorithm. Furthermore, propagation loss simulation assumes that integrals of the propagation domain are calculated as line integrals over a propagation field.

Furthermore, a dimensionality of the propagation loss simulation is reduced by using a Radon transformation. Furthermore, the propagation loss is assumed as corresponding to a two- or three-dimensional integral over a propagation field.

Fig. 2 shows a top view according to the embodiment of the method. In particular, the environment 14 is shown. In particular, it is shown that the mathematical model may comprise at least additionally a transmission power parameter and a free-space parameter of the propagation loss. Furthermore, the propagation field at least may be predefined by a physical parameter 16 of the environment 14. For example, the physical parameter 16 defines environment geometry information, for example shown as a wall 18 in Fig. 2, via transmission coefficients.

In particular, the invention comprises to use a new machine learning method that is based on known laws of physics (= represented by spatial loss field (SLF) and corresponding constraints to the gradients) as per eq (1) and apply it to a radio propagation problem (= SLF is based on floor plan and obstacle material properties and training data are RSSI measurements). Conventional physics-aware machine learning methods are typically based on partial-differential equations (PDEs), while in RSSI case we need an integral equation.

The invention is based on a novel physics-aware learning formulation, where a single neural network is trained jointly on pathloss (RSSI) measurements and information about the underlying spatial loss field. The formulation is based on a two-dimensional geographical area, where the RSSI between a transmitter 20 located at $\mathbf{x}_{tx} = [x_0, y_0]$ and a receiver located at $\mathbf{x}_{rx} = [x_1, y_1]$ is modelled by:

$$\mathrm{RSSI}(\mathbf{x}_{tx}, \mathbf{x}_{rx}) = G_0 - \gamma \log_{10} \| \mathbf{x}_{tx} - \mathbf{x}_{rx} \| - \int_{\mathbf{x}_{rx}}^{\mathbf{x}_{tx}} \mathrm{SLF}(\mathbf{x}) \ d\mathbf{x}. \quad (1)$$

In (1), the first component $G_0$ is equivalent to the TX power, the second component models the free-space component of the path loss, and the integrated SLF (ISLF) models additional attenuation of the obstacles:

$$ISLF(\mathbf{x}_{tx}, \mathbf{x}_{rx}) = \int_{\mathbf{x}_{rx}}^{\mathbf{x}_{tx}} SLF(\mathbf{x}) \; d\mathbf{x}. \quad (2)$$

The TX power $G0$ and free-space component parameter $y$ can be assumed to be known as they can be measured or estimated using simple conventional approaches. Hence, the main problem is to obtain a tractable learning approach for the SLF and ISLF. The latter explicitly encodes the transmission of RF-waves travelling between different tx-rx pairs ($\mathbf{x}_{rx,i}, \mathbf{x}_{tx,i}$) through common building materials such as drywall, plexiglass, blinds, glass, plywood, etc.

ISLF training data is obtained from RSSI measurements between different tx-rx pairs according to:

$$ISLF(\mathbf{x}_{tx}, \mathbf{x}_{rx}) = G_0 - RSSI(\mathbf{x}_{tx}, \mathbf{x}_{rx}) - \gamma \log_{10} \| \mathbf{x}_{tx} - \mathbf{x}_{rx} \| \quad (3)$$

resulting in a dataset of tuples $\mathcal{D} := (\mathbf{x}_{tx,j}, \mathbf{x}_{rx,j}, ISLF(\mathbf{x}_{tx,j}, \mathbf{x}_{rx,j}))_{j \in \mathcal{J}}$.

SLF training data is obtained from environment geometry information via transmission coefficients of common building material as already known. An exemplary SLF is provided in Fig. 2.

The joint physics-aware learning problem using SLF and ISLF training data can be posed via a novel training loss function.

The first formulation assumes that the ISLF corresponds to a 2D integral over the rectangular domain $[x_0, y_0]$ $\times$ $[x_1, y_1]$ spanned by $\mathbf{x}_{tx} := (x_0, y_0)$ and $\mathbf{x}_{rx} := (x_1, y_1)$, i.e.:

$$ISLF(\mathbf{x}_{tx}, \mathbf{x}_{rx}) = \int_{x_0}^{x_1} \int_{y_0}^{y_1} SLF(x, y) \; dx dy. \quad (4)$$

In this case, the physics aware loss function is formulated as [1]:

$$Loss(\boldsymbol{\theta}) = \sum_i \phi \left( SLF(x_i, y_i) - \frac{d}{dx}\frac{d}{dy} NN(\boldsymbol{\theta}, x_i, y_i) \right)$$
$$+ \sum_j \rho(ISLF(x_{tx,j}, y_{tx,j}, x_{rx,j}, y_{rx,j}) - (NN(\boldsymbol{\theta}, x_{tx,j}, y_{tx,j}) - NN(\boldsymbol{\theta}, x_{rx,j}, y_{tx,j})$$
$$-NN(\boldsymbol{\theta}, x_{tx,j}, y_{rx,j}) + NN(\boldsymbol{\theta}, x_{rx,j}, y_{rx,j}))).$$

Here, the loss function couples the training of SLF and ISLF via fitting the training SLF data $SLF(x_i, y_i)$ to the mixed-derivative of a neural network $\frac{d}{dx}\frac{d}{dy} NN(\boldsymbol{\theta}, x_i, y_i)$ and via fitting the training ISLF data to the signed sum of network evaluations at the four distinct points $(x_{tx,j}, y_{tx,j})$, $(x_{rx,j}, y_{tx,j})$, $(x_{tx,j}, y_{rx,j})$, $(x_{rx,j}, y_{rx,j})$.

The second formulation assumes that the integrals are calculated as line integrals as in the original formulation (2) from starting point $(x_{tx,j}, y_{tx,j})$ to endpoint $(x_{rx,j}, y_{rx,j})$ which reduces the dimensionality and training effort:

$$Loss(\boldsymbol{\theta}) = \sum_i \phi \left( SLF(z_i, \alpha_i, s_i) - \frac{d}{dz} NN(\boldsymbol{\theta}, z_i, \alpha_i, s_i) \right) \quad (5)$$

$$+ \sum_j \rho \left( ISLF(z_{0,j}, z_{1,j}, \alpha, s) - (NN(\boldsymbol{\theta}, z_{0,j}, \alpha_j, s_j) - NN(\boldsymbol{\theta}, z_{1,j}, \alpha_j, s_j)) \right). \quad (6)$$

This is achieved by translating (x,y)-coordinates to Radon coordinates according to the transformation

$$(z, \alpha, s) \to (x, y): (x, y) = (z\sin\alpha + s\cos\alpha, -z\cos\alpha + s\sin\alpha). \quad (7)$$

Start point $(x_0, y_0)$ and endpoint $(x_1, y_1)$ of the line integral are transformed using the bijection $(x_0, y_0, x_1, y_1) \to$

$(z_0, z_1, \alpha, s)$:

$$\alpha = \text{atan2}(y_1 - y_0, x_1 - x_0) + \frac{\pi}{2}. \quad (8)$$

and

$$\begin{bmatrix} z_0 \\ z_1 \\ s \end{bmatrix} = \begin{bmatrix} \sin\alpha & 0 & \cos\alpha \\ -\cos\alpha & 0 & \sin\alpha \\ 0 & \sin\alpha & \cos\alpha \\ 0 & -\cos\alpha & \sin\alpha \end{bmatrix}^{\dagger} \begin{bmatrix} x_0 \\ y_0 \\ x_1 \\ y_1 \end{bmatrix}, \quad (9)$$

where $(\cdot)^{\dagger}$ denotes the Moore-Penrose Pseudo-Inverse.

Conventional training according to the state of the art of a neural network $NN(\theta, x_i, y_i)$ for a bivariate function $f(x_i, y_i)$ is done by minimizing:

$$\text{Loss}(\boldsymbol{\theta}) = \sum_i \phi(f(x_i, y_i) - NN(\boldsymbol{\theta}, x_i, y_i)), \quad (10)$$

where $\phi(\cdot)$ is an appropriate loss such as squared, absolute or huber loss.

In the novel physics-aware formulation, the neural network $NN(\theta, x_i, y_i)$ is trained instead to calculate integrals $\int_{x_l}^{x_u} \int_{y_l}^{y_u} f(x, y) \, dxdy$ by minimizing the error:

$$\text{Loss}(\boldsymbol{\theta}) = \sum_i \phi\left(f(x_i, y_i) - \frac{d}{dx}\frac{d}{dy} NN(\boldsymbol{\theta}, x_i, y_i)\right), (11)$$

where the term $\frac{d}{dx}\frac{d}{dy} NN(\boldsymbol{\theta}, x_i, y_i)$ can be calculated at training time for points $(x_i, y_i)$ using standard automatic differentiation. After optimizing the neural network parameters $\theta^*$, integrals can be calculated according to:

$$\int_{x_l}^{x_u} \int_{y_l}^{y_u} f(x, y) \, dxdy = \quad (12)$$

$$NN(\boldsymbol{\theta}, x_l, y_l) - NN(\boldsymbol{\theta}, x_u, y_l) - NN(\boldsymbol{\theta}, x_l, y_u) + NN(\boldsymbol{\theta}, x_u, y_u). \quad (13)$$

## Claims

1. A method for teaching an electronic computing device (10) comprising at least a machine learning algorithm (22) for predicting a position-based propagation (12) in an environment (14), comprising the steps of:

   - providing a mathematical model for the position-based propagation (12), wherein the mathematical model comprises at least a physical model for the propagation in the environment (14) ;
   - generating training data for the machine learning algorithm (22) comprising a propagation field and/or a propagation domain;
   - training the machine learning algorithm (22) by fitting the training data to a partial derivative of the machine learning algorithm (22); and
   - obtaining a prediction of a propagation loss by a weighted sum of multiple evaluations of the trained machine learning algorithm (22).

2. A method according to claim 1, wherein training data additionally comprises second training data of propagation measurements, and training the machine learning algorithm (22) additionally comprises fitting the second training data to weighted sums of evaluations of the machine learning algorithm.

3. A method according to claim 1 or 2, wherein the mathematical model comprises at least additionally a transmission power parameter and a free-space parameter of the propagation loss.

4. A method according to claim 1 to 3, wherein propagation loss simulation assumes that integrals over the propagation domain are calculated as line integrals over a propagation field.

5. A method according to any of claims 1 to 4, wherein a dimensionality of a propagation loss simulation is reduced by using a Radon transformation.

6. A method according to any of claims 1 to 5, wherein the propagation loss is assumed as corresponding to a two- or three-dimensional integral over a propagation field.

7. A method according to any of claims 1 to 6, wherein for the propagation field at least one physical parameter (16) of the environment (14) is predefined.

8. A method according to claim 7, wherein the at least one physical parameter (16) defines environment geometry information via transmission coefficients.

9. A method according to any of claims 1 to 8, wherein the machine learning algorithm (22) is provided as a neural network.

10. A method for using the trained electronic computing device (10) according to one of previous claims, wherein the position-based propagation (12) in the environment (14) is predicted by optimizing parameters of the neural network based on loss descent direction.

11. A method according to claim 10, wherein a propagation field simulation is evaluated by derivative of machine learning algorithm (22) and/or the propagation loss is evaluated by weighted sum of multiple machine learning evaluations.

12. A computer program product comprising program code means for performing the method according to any of claims 1 to 9 and/or a method according to claim 10 to 11.

13. A computer-readable storage medium comprising at least the computer program product according to claim 12.

14. An electronic computing device (10) for predicting a propagation in an environment (14), comprising at least one machine learning algorithm (22), wherein the machine learning algorithm (22) is trained by a method according to any of claims 1 to 9.

15. An electronic computing device (10) for predicting a propagation in an environment (14), comprising at least one trained machine learning algorithm (22), wherein the electronic computing device (10) is configured for performing a method according to any of claims 10 to 11.

## FIG 1

FIG 2

Europäisches
Patentamt

European
Patent Office

Office européen
des brevets

# EUROPEAN SEARCH REPORT

Application Number

EP 22 18 9108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | STEFFEN LIMMER ET AL: "Physics-informed neural networks for pathloss prediction", ARXIV.ORG, CORNELL UNIVERSITY LIBRARY, 201 OLIN LIBRARY CORNELL UNIVERSITY ITHACA, NY 14853, 23 November 2022 (2022-11-23), XP091376613, ----- | 1-15 | INV. H04W16/20 G06N3/08 ADD. H04W16/22 H04W24/10 |
| X | CHENG HONG ET AL: "CNN-Based Indoor Path Loss Modeling with Reconstruction of Input Images", 2018 INTERNATIONAL CONFERENCE ON INFORMATION AND COMMUNICATION TECHNOLOGY CONVERGENCE (ICTC), IEEE, 17 October 2018 (2018-10-17), pages 605-610, XP033447870, DOI: 10.1109/ICTC.2018.8539415 [retrieved on 2018-11-16] | 10,11,15 | |
| A | * abstract * * paragraph [00I.] * * paragraph [III.] – paragraph [0VI.] * ----- | 1-9, 12-14 | TECHNICAL FIELDS SEARCHED (IPC) |
| X | SERETIS ARISTEIDIS ET AL: "Toward Physics-Based Generalizable Convolutional Neural Network Models for Indoor Propagation", IEEE TRANSACTIONS ON ANTENNAS AND PROPAGATION, IEEE, USA, vol. 70, no. 6, 4 January 2022 (2022-01-04), pages 4112-4126, XP011911062, ISSN: 0018-926X, DOI: 10.1109/TAP.2021.3138535 [retrieved on 2022-01-05] | 10,11,15 | H04W G06N |
| A | * abstract * * paragraph [00I.] – paragraph [0VI.] * ----- -/-- | 1-9, 12-14 | |

The present search report has been drawn up for all claims

| Place of search | Date of completion of the search | Examiner |
|---|---|---|
| Munich | 11 January 2023 | Bösch, Michael |

EPO FORM 1503 03.82 (P04C01)

Europäisches
Patentamt

European
Patent Office

Office européen
des brevets

**EUROPEAN SEARCH REPORT**

Application Number

EP 22 18 9108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/173821 A1 (CHEN CHUANHSIN [JP] ET AL) 2 June 2022 (2022-06-02) | 10,11,15 | |
| A | * paragraph [0005] - paragraph [0045] *<br>* paragraph [0055] - paragraph [0066] *<br>* paragraph [0073] - paragraph [0118] *<br>* figures 1-3 * | 1-9, 12-14 | |
|   | ----- | | |
| X | US 2020/169895 A1 (CHEN HAO [US] ET AL) 28 May 2020 (2020-05-28) | 10,11,15 | |
| A | * paragraph [0010] - paragraph [0012] *<br>* paragraph [0079] - paragraph [0088] *<br>* paragraph [0096] - paragraph [0131] *<br>* figures 5, 6, 7, 10, 13 * | 1-9, 12-14 | |
|   | ----- | | |
| X | RON LEVIE ET AL: "RadioUNet: Fast Radio Map Estimation with Convolutional Neural Networks",<br>ARXIV.ORG, CORNELL UNIVERSITY LIBRARY, 201 OLIN LIBRARY CORNELL UNIVERSITY ITHACA, NY 14853,<br>22 December 2020 (2020-12-22),<br>XP081842027, | 10,11,15 | TECHNICAL FIELDS SEARCHED (IPC) |
| A | * the whole document * | 1-9, 12-14 | |
|   | ----- | | |
| A | US 2021/044988 A1 (PARK YOONSUNG [KR] ET AL) 11 February 2021 (2021-02-11)<br>* paragraph [0005] *<br>* paragraph [0057] - paragraph [0074] *<br>* paragraph [0109] - paragraph [0124] * | 1-15 | |
|   | ----- | | |
|   | -/-- | | |

The present search report has been drawn up for all claims

| Place of search | Date of completion of the search | Examiner |
|---|---|---|
| Munich | 11 January 2023 | Bösch, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 22 18 9108

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CUOMO SALVATORE ET AL: "Scientific Machine Learning Through Physics-Informed Neural Networks: Where we are and What's Next", JOURNAL OF SCIENTIFIC COMPUTING, SPRINGER US, NEW YORK, vol. 92, no. 3, 26 July 2022 (2022-07-26), XP037917814, ISSN: 0885-7474, DOI: 10.1007/S10915-022-01939-Z [retrieved on 2022-07-26] * the whole document * ----- | 1-15 | |

TECHNICAL FIELDS
SEARCHED (IPC)

The present search report has been drawn up for all claims

| Place of search | Date of completion of the search | Examiner |
|---|---|---|
| Munich | 11 January 2023 | Bösch, Michael |

EPO FORM 1503 03.82 (P04C01)

**page 3 of 3**

## ANNEX TO THE EUROPEAN SEARCH REPORT
## ON EUROPEAN PATENT APPLICATION NO.

EP 22 18 9108

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2023

| Patent document cited in search report | | Publication date | Patent family member(s) | | Publication date |
|---|---|---|---|---|---|
| US 2022173821 | A1 | 02-06-2022 | EP | 3955587 A1 | 16-02-2022 |
| | | | US | 2022173821 A1 | 02-06-2022 |
| | | | WO | 2020209380 A1 | 15-10-2020 |
| US 2020169895 | A1 | 28-05-2020 | EP | 3868143 A1 | 25-08-2021 |
| | | | US | 2020169895 A1 | 28-05-2020 |
| | | | WO | 2020111748 A1 | 04-06-2020 |
| US 2021044988 | A1 | 11-02-2021 | AU | 2017360650 A1 | 04-04-2019 |
| | | | AU | 2017361585 A1 | 04-04-2019 |
| | | | CN | 109891781 A | 14-06-2019 |
| | | | CN | 109937543 A | 25-06-2019 |
| | | | EP | 3494655 A1 | 12-06-2019 |
| | | | EP | 3497827 A1 | 19-06-2019 |
| | | | KR | 20180055622 A | 25-05-2018 |
| | | | KR | 20180055623 A | 25-05-2018 |
| | | | US | 2021044988 A1 | 11-02-2021 |

EPO FORM P0459

For more details about this annex : see Official Journal of the European Patent Office, No. 12/82

**REFERENCES CITED IN THE DESCRIPTION**

**Patent documents cited in the description**

- US 8102314 B2